# EUROPEAN PATENT SPECIFICATION

(11) **EP 2 471 616 B1**
(45) Date of publication and mention of the grant of the patent: **15.02.2017**
(21) Application number: 10811756.5
(22) Date of filing: 19.08.2010
(51) Int. Cl.: B23B 1/00

(54) **METHOD FOR MACHINING AUSTENITE STAINLESS STEEL EQUIPMENT AND PIPING, AND NUCLEAR POWER PLANT EQUIPMENT AND PIPING MACHINED BY MEANS OF SAID METHOD**
VERFAHREN ZUR INDUSTRIELLEN BEARBEITUNG VON ELEMENTEN UND RÖHREN AUS AUSTENITISCHEM EDELSTAHL SOWIE IN DIESEM VERFAHREN INDUSTRIELL HERGESTELLTE ELEMENTE UND RÖHREN FÜR EIN KERNKRAFTWERK
PROCÉDÉ D'USINAGE D'UN ÉQUIPEMENT ET D'UNE CANALISATION EN ACIER INOXYDABLE AUSTÉNITIQUE ET ÉQUIPEMENT ET CANALISATION D'UNE CENTRALE NUCLÉAIRE USINÉS AU MOYEN DUDIT PROCÉDÉ

(30) Priority: 28.08.2009 JP 2009198263; 02.12.2009 JP 2009274517
(43) Date of publication of application: 04.07.2012
(73) Proprietor: Mitsubishi Heavy Industries, Ltd., Tokyo 108-8215 (JP)
(72) Inventor: MICHISHITA, Yukio, Tokyo 108-8215 (JP); KOBAYASHI, Takaaki, Tokyo 108-8215 (JP); MATSUBARA, Nariyasu, Tokyo 108-8215 (JP)
(74) Representative: Intès, Didier Gérard André
(86) International application number: PCT/JP2010/064010
(87) International publication number: WO 2011/024706

(56) References cited:
- JP-A- 7 136 826
- JP-A- 2003 191 110
- JP-A- 2006 255 793
- US-A- 4 417 489

## Description

### {Technical Field}

The present invention relates to a machining method for austenite stainless steel equipment and piping, according to the preamble of claim 1.

### {Background Art}

Austenite stainless steel is chiefly used as material for equipment and piping or the like in a nuclear power plant. It has been known that, by performing cool machining such as ordinary cutting and grinding, etc. on austenite stainless steel, a hardened layer is formed on a surface thereof (see Patent Literature 1, Patent Literature 2, for example).

For example, it is said that, generally in recirculation piping or the like of a boiling-reactor nuclear power plant, if the hardness of this hardened layer becomes 300 HV or more in terms of the Vickers hardness, stress corrosion cracking (SCC) is likely to be caused, and the same thing is considered in equipment and piping of a pressurized-water nuclear plant where water circulates.

In a conventional machining method, a rake angle of a cutting tool is set to be 15° or so at the greatest in the light of edge strength (chipping prevention) of the tool and enhancement of its service life, and even if machining conditions such as a depth of cut and cutting speed are adjusted, a hardened layer exceeding the above mentioned hardness (300 HV in terms of the Vickers hardness) is formed during a machining operation.

Conventionally in such piping, in order to suppress occurrence of SCC, such a solution is employed that, following the machining operation, a hardened layer of the surface generated by the machining is removed by buffing or the like on the machined surface, or compressive stress is applied onto the machined surface layer so as to suppress occurrence of SCC.

Hence, in a conventional machining method, since a cutting tool is selected in the light of securing edge strength of the tool, and a rake angle thereof is set to be 15° or so at the greatest, it is a common knowledge in the industry that a hardened layer which hardness exceeds the above-mentioned hardness is generated during a machining operation even if machining conditions such as a depth of cut and cutting speed are adjusted.

### {Citation List}

### {Patent Literature}

{PTL 1} Japanese Unexamined Patent Application, Publication No. 2005-257589 (Paragraphs [0001], [0002])
{PTL 2} Japanese Unexamined Patent Application, Publication No. 2008-96174

### {Summary of Invention}

### {Technical Problem}

However, all the above-mentioned prior arts require after treatment such as removal of the hardened layer and/or applying of compressive stress after a machining operation anyhow, which results in increase in working hours and cost.

In addition, in the case of applying the compressive stress to suppress occurrence of SCC, the applied compressive stress is reduced or removed if working such as welding or the like that causes tensile stress is carried out in the after treatment, which results in reduction or loss of suppression effect to suppress the occurrence of scc. US 4 417 489 discloses the preamble of claim 1.

In view of the above-mentioned facts, the present invention has an object to provide a machining method for austenite stainless steel equipment and piping according to claim 1, which is capable of suppressing generation of a hardened layer and occurrence of SCC without operating an after treatment, and reducing working hours and cost, as well as to provide nuclear power plant equipment and piping machined by use of this method.

### {Solution to Problem}

In order to solve the above problems, the present invention employs the following solutions.

Specifically, the present invention provides a machining method for austenite stainless steel equipment and piping, which includes a finishing treatment process for performing a machining operation by use of a finishing-cut tool whose rake angle is +29° or more to suppress work hardening of a surface.

As a result of intensive studies made by the inventors, it was found that it is possible to suppress hardness of a machined surface layer to be less than 300 HV in terms of the Vickers hardness by performing the machining operation by use of the finishing-cut tool whose rake angle is +29° or more. Note that the hardness of the surface layer is defined as hardness at a depth of 0.01 mm from the surface.

If the rake angle is set to be as great as +29° or more, a shear angle of a chip becomes greater and a thickness of the chip becomes thinner, so that cutting force (cutting resistance) required for the cutting becomes smaller. Accordingly, the cutting resistance acting on the austenite stainless steel equipment and piping is reduced, therefore it is understood that the hardening of the surface layer can be suppressed.

If the finishing treatment is carried out by the machining using the finishing-cut tool whose tip end is very sharp, and whose rake angle is +29° or more, it is possible to keep the hardness of the finished surface layer to be less than 300 HV in terms of the Vickers hardness.

It is thus possible to suppress occurrence of SCC only by use of the machining, without requiring after treatment such as removal of the hardened layer and/or applying compressive stress, which has conventionally been carried out. Since such after treatment can be eliminated, working hours for the operation and cost therefor can be reduced.

In addition, since the hardness of the surface layer is low, even if working such as welding that causes tensile stress is applied after the machining, it is possible to maintain the necessary SCC resistance.

In the above aspect, a depth of finishing cut for the finishing-cut tool is preferably 0.1 mm or more and 0.2 mm or less.

Work hardening due to a pretreatment process becomes significant, especially in a region from the surface to a depth of 0.1 mm; and if machining is carried out in a region less than this, abrasion of the tool is progressed, so that the tip end of the tool becomes rounder and loses its sharpness. Thus, the depth of finishing cut of less than 0.1 mm rather brings about hardening of the surface. If the depth of finishing cut exceeds 0.2 mm, cutting force (cutting resistance) acting from the austenite stainless steel equipment and piping (work material) becomes greater, and the cutting edge is likely to be chipped, so that it becomes difficult to apply the tool whose tip end is very sharp and whose rake angle is +29° or more.

In the above aspect, it is preferable to include a base treatment process for performing a machining operation by use of a base-cut tool whose rake angle is smaller than the rake angle of the finishing-cut tool with a depth of base cut that is a greater depth of cut than the depth of finishing cut, prior to the finishing treatment process.

In the machining condition for the finishing treatment process, the depth of finishing cut for the finishing-cut tool is set to be 0.1 mm or more and 0.2 mm or less, and if the above machining condition for the finishing treatment process is applied to the entire process when performing the cutting in a predetermined size, it could be considered that the number of machining operations and working hours increase.

In the present aspect, in the base treatment process, the machining operation is performed by use of a base-cut tool with the depth of base cut that is a greater depth of cut than that in the machining condition for the finishing treatment process, so that the cutting amount of the finishing treatment process can be set to be smaller. Accordingly, it is possible to enhance efficiency of the entire machining operation.

In this case, to make the hardness of the surface layer machined in the base treatment process become not so great enables the tool whose tip end is very sharp and whose rake angle is +29° or more to be applicable.

In the above aspect, it is preferable that the depth of base cut is 1 mm or less, preferably 0.2 mm or more and 0.3 mm or less.

If the cutting with the depth of base cut of more than 1 mm is carried out, the hardness of the machined surface becomes significantly great, so that it becomes difficult to make the surface to have a predetermined hardness, that is, hardness of less than 300 HV in terms of the Vickers hardness in the finishing treatment process. In order to perform the machining in the finishing treatment process more effectively, the depth of base cut is preferably set to be 0.2 mm or more and 0.3 mm or less.

In the above aspect, it is preferable that the treatment amount of the base treatment process is 0.5 mm thick or more and 2 mm thick or less, preferably 1 mm thick or so.

In the case where the treatment amount of the machining exceeds the above range, in consideration of the machining efficiency, a rough machining treatment process in which rough machining treatment is carried out before the base treatment process is preferable.

Another aspect of the present invention provides nuclear power plant equipment and piping machined by use of the machining method for austenite stainless steel equipment and piping according to the invention.

The nuclear power plant equipment and piping is manufactured by use of the machining method for austenite stainless steel equipment and piping that can suppress occurrence of SCC, without requiring after treatment such as removal of the hardened layer and/or applying compressive stress, and even if working such as welding that causes tensile stress is applied after the machining, it is possible to maintain the SCC resistance. Accordingly, it is possible to reduce manufacturing time and cost required for the manufacturing.

### {Advantageous Effects of Invention}

According to the present invention, since the finishing treatment is carried out by the machining using the finishing-cut tool whose rake angle of +29° or more, it is possible to keep the hardness of the machined surface layer to be less than 300 HV in terms of the Vickers hardness.

Therefore, it is possible to suppress occurrence of SCC only by use of the machining, without requiring after treatment such as removal of the hardened layer and/or applying compressive stress, or the like, which has conventionally been carried out. Since such after treatment can be eliminated, the working hours and cost can be reduced. In addition, since the hardness of the surface layer is low, even if working such as welding that causes tensile stress is applied after the machining, it is possible to maintain the necessary SCC resistance.

### {Brief Description of Drawings}

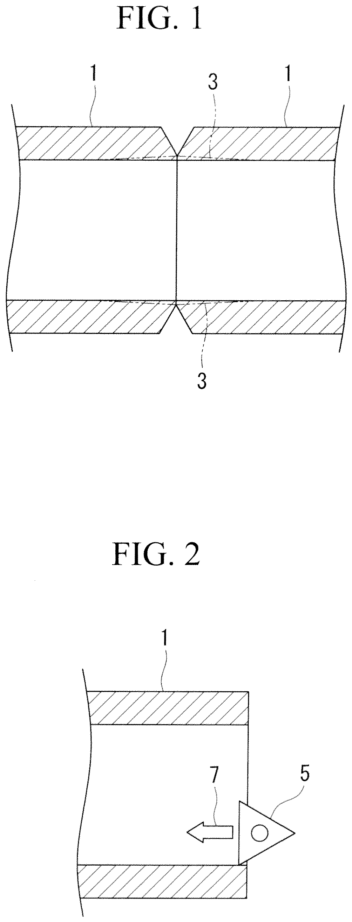

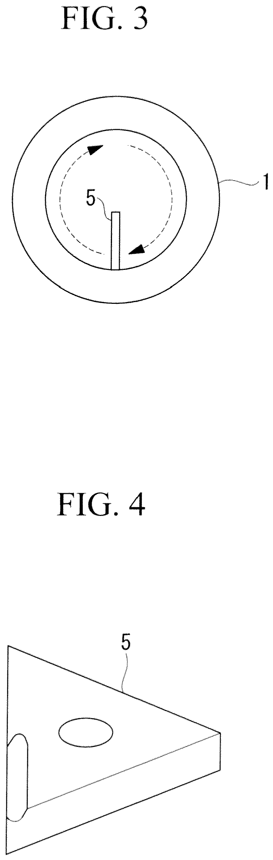

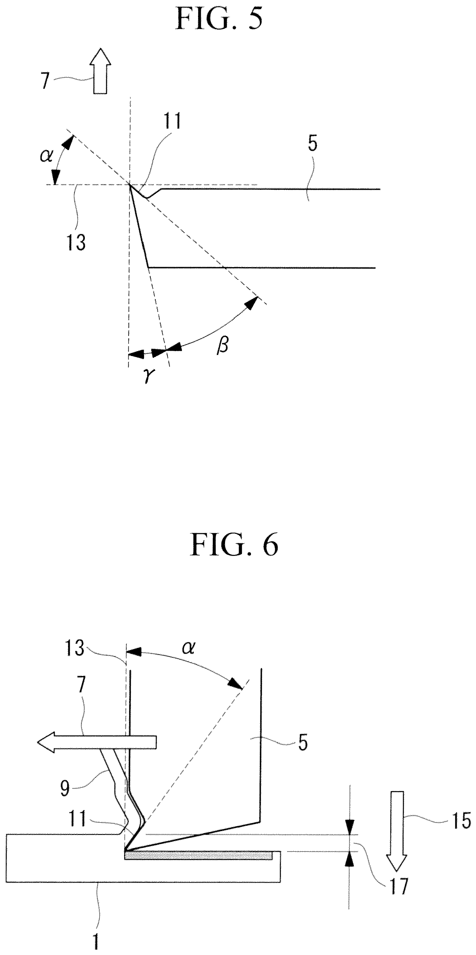

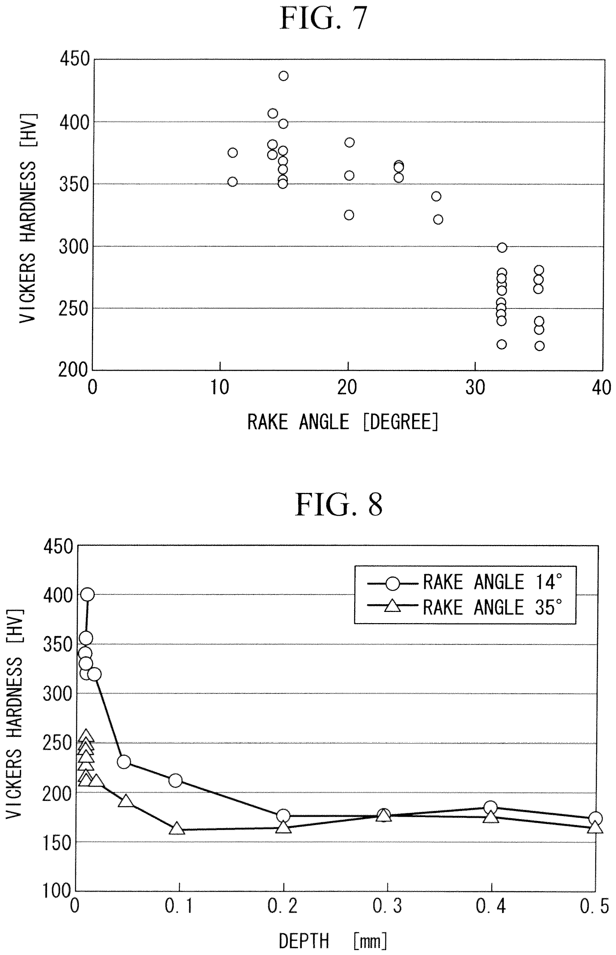

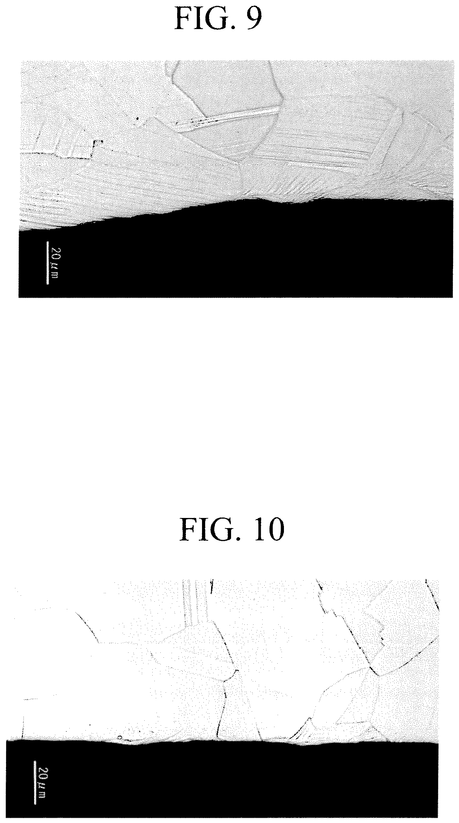

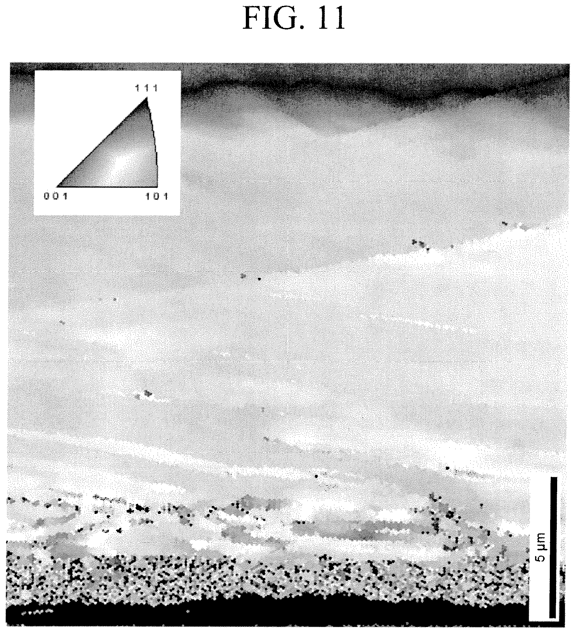

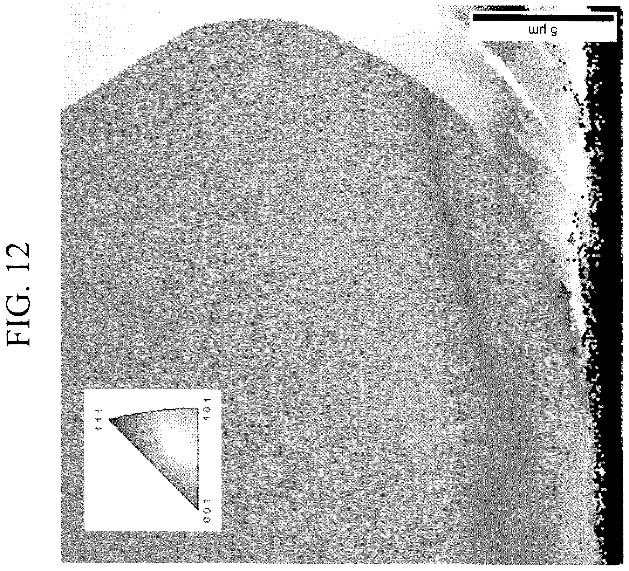

{Fig. 1} Fig. 1 is a cross sectional view for explaining a thinning process of ordinary piping in a pressurized-water nuclear plant utilizing a machining method for austenite stainless steel equipment and piping according to one embodiment of the present invention.
{Fig. 2} Fig. 2 is a longitudinal sectional view illustrating a state of machining the ordinary piping.
{Fig. 3} Fig. 3 is a cross sectional view illustrating a state of machining the ordinary piping.
{Fig. 4} Fig. 4 is a perspective view of a throw-away tip for use in the machining.
{Fig. 5} Fig. 5 is a front elevational view illustrating a tool tip end portion of the throw-away tip for use in the machining.
{Fig. 6} Fig. 6 is a block diagram illustrating a state of cutting by use of the throw-away tip.
{Fig. 7} Fig. 7 shows a graph illustrating a relation between a rake angle of a cutting tool and hardness of a surface layer in a cutting test.
{Fig. 8} Fig. 8 shows a graph illustrating a relation between a depth and hardness in the cutting test.
{Fig. 9} Fig. 9 is a photograph showing a cross sectional microstructure in a vicinity of a surface of work material machined by use of a cutting tool whose rake angle is 14°.
{Fig. 10} Fig. 10 is a photograph showing a cross sectional microstructure in a vicinity of a surface of the work material machined by use of a cutting tool whose rake angle is 35°.
{Fig. 11} Fig. 11 is a photograph showing an observation result of EBSP in a vicinity of the surface of the work material machined by use of the cutting tool whose rake angle is 14°.
{Fig. 12} Fig. 12 is a photograph showing an observation result of EBSP in a vicinity of the surface of the work material machined by use of the cutting tool whose rake angle is 35°.

### {Description of Embodiments}

Hereinafter, an embodiment according to the present invention will be explained with reference to Fig. 1 to Fig. 12.

Fig. 1 illustrates a content of a thinning process for ordinary piping in a pressurized-water nuclear plant utilizing a machining method for austenite stainless steel equipment and piping according to one embodiment of the present invention.

A primary system of the pressurized-water nuclear plant includes a piping system other than main coolant pipes through which primary coolant circulates, for example; a piping system that performs emergency reactor cooling and emergency boron injection at the time of a loss of primary cooling water accident and main steam pipe rupture; a piping system that supplies make-up water to maintain the volume of the primary coolant when the primary coolant is shrunk due to decrease in load; and a piping system that removes heat of the primary coolant after a reactor is stopped, and injects boric acid solution of a refueling water pump into the reactor so as to lower the temperature at the time of a loss of coolant accident. Piping utilized in these piping systems is referred to as ordinary piping in contrast with the main coolant pipes.

The above-mentioned ordinary piping 1 is formed by austenite stainless steel such as SUS316 and SUS304.

The ordinary piping 1 is joined through welding or the like into a piping system. At this time, in order to smooth a butt-welded portion of the welded ordinary piping 1, a thinning process for machining an inner face of joined portion thereof is performed. In this thinning process, the joined portion is machined to a surface 3 indicated in an alternate long and short dash line of Fig. 1 to align inner diameters of both ends of the ordinary piping 1 with each other, so that the butt-welded portion of the welded ordinary piping 1 becomes smoothly continued. The cutting amount of this thinning process is 1 to 2 mm thick or so, for example.

As illustrated in Fig. 2 and Fig. 3, the machining is performed by rotating the ordinary piping 1 about an axial line thereof, and feeding a throw-away tip (a finishing-cut tool, a base-cut tool) 5 toward a feed direction 7.

Fig. 4 and Fig. 5 illustrate the structure of the throw-away tip 5, and Fig. 4 is a perspective view of the throw-away tip 5 and Fig. 5 illustrates a tool tip end portion thereof. Fig. 6 illustrates a cutting state by use of the throw-away tip 5.

A chip 9 is generated in front surface of the feed direction of the throw-away tip 5, and a rake face 11 is provided for scooping this chip 9. An angle of this rake face 11 relative to a vertical plane 13 is referred to as a rake angle α.

An angle of the tool tip end portion of the throw-away tip 5 is referred to as a tool angle β, and an angle for making space between the throw-away tip 5 and the ordinary piping 1 that is work material is referred to as a relief angle γ.

The throw-away tip 5 is fed in a depth-of-cut direction 15 by a depth of cut (a depth of finishing cut, a depth of base cut) 17, and is also fed in the feed direction 7, thereby carrying out the cutting with a predetermined depth of cut, and this process is repeatedly performed so as to accomplish the machining with a predetermined amount.

Fig. 7 illustrates results in which the above-described thinning process was carried out with the throw-away tip 5 using various rake angles α, and hardness of a surface portion of each machined surface at that time was measured.

The hardness of each machined surface is measured by measuring the Vickers hardness at a load of 10gf.

The respective rake angles α of the throw-away tip 5 used in a test are 11°, 14°, 15°, 20°, 24°, 27°, 32° and 35°.

In various machining conditions, each cutting with the rake angles α of 11° to 27° was carried out in the following range: the cutting speed is 7 to 87 m/min, the depth of cut 17 is 0.1 to 1 mm, and the feeding rate is 0.08 to 0.25 mm/r.

Using the same throw-away tip 5, a rough machining with the greater depth of cut 17 was initially carried out, and thereafter a finishing cutting of approximately 1 mm or so is carried out with the smaller depth of cut 17.

In various machining conditions, each cutting with the rake angles α of 32° and 35° was carried out in the following range: the machining speed is 18 to 35 m/min, the depth of cut 17 is 0.1 to 0.2 mm, and the feeding rate is 0.08 to 0.13 mm/r.

The cutting with the rake angles α of 32° and 35° was carried out in such a manner that, after the cutting using the rake angles α of 11° to 27° was completed, the cutting was carried out by replacing the throw-away tip 5 whose rake angles α were of 32° and 35°.

Specifically, the cutting with the rake angles α of 32° and 35° was carried out by performing the rough machining using the rake angles α of 11° to 27°, and then performing a base cutting with the smaller depth of cut 17 of approximate 1 mm or so, and thereafter further performing the cutting with the further smaller depth of cut 17.

This base cutting using the rake angles α of 11° to 27° with the smaller depth of cut 17 of approximate 1 mm or so serves as a base treatment process for the cutting using the throw-away tip 5 whose rake angles α were of 32° and 35°.

In the throw-away tip 5 whose rake angles α is of 32° and 35° (the rake angle of +29° or more), the depth of cut 17 is set to be 0.1 mm or more and 0.2 mm or less.

Work hardening due to a pretreatment process becomes significant, especially in a region from the surface to a depth of 0.1 mm; and if machining is carried out in a region less than this, abrasion of the tip end of the throw-away tip 5 is progressed, so that the tip end of the throw-away tip 5 becomes rounder and loses its sharpness. Thus, the depth of cut 17 of less than 0.1 mm rather brings about hardening of the surface.

If the depth of cut 17 exceeds 0.2 mm, cutting resistance acting from the ordinary piping 1 on the throw-away tip 5 becomes greater, so that the cutting edge of the throw-away tip 5 is likely to be chipped, which requires more time and cost for maintenance thereof.

As apparent from Fig. 7, the throw-away tip 5 whose rake angles α are 11° to 27° exhibits the Vickers hardness of more than 320 HV even if the machining condition is changed.

To the contrary, with respect to the throw-away tip 5 whose rake angles α are 32° and 35°, the Vickers hardness never exceeds 300 HV even if the machining condition is changed, and this shows that the hardness of the surface is reduced, compared with the machining with the throw-way tip 5 whose rake angles α are 11° to 27°.

For example, connecting every median of hardness for the respective rake angles α, the rake angle α of 29° located approximately at the center between the rake angle α of 27° and the rake angle α of 32° exhibits the Vickers hardness of less than 300 HV.

If the rake angle is set to be as great as +29° or more, the shear angle of the chip 9 becomes greater and the thickness of the chip 9 becomes thinner, so that cutting force (cutting resistance) required for the cutting becomes smaller. Accordingly, the cutting resistance acting on the ordinary piping 1 is reduced, therefore it is understood that the hardening of the machined surface can be suppressed.

Fig. 8 illustrates results in which the above-described thinning process was carried out by use of the throw-away tip 5 whose rake angles α are 14° and 35°, and each hardness of the machined faces in the depth direction at that time was measured.

The hardness measurement was carried out in such a manner that, measurements were made at ten points at a depth of 0.01 mm from the surface; and with respect to one of the above ten points, measurements were made at depths of 0.02 and 0.05 mm, along with at a pitch of 0.1 mm from 0.1 mm to 1.0 mm deep from the surface. The hardness of each machined surface was measured by measuring the Vickers hardness at a load of 10gf.

The same machining conditions for the throw-away tip 5 were used as those in the above description.

As apparent from Fig. 8, the hardness in the vicinity of the surface (within 0.01 mm depth) machined with the rake angle of 35° is reduced as much as approximately 100 HV, compared with the hardness of that with the rake angle of 14°.

In a region at a depth of 0.2 mm or more from the surface, both rake angles exhibit approximately the same hardness. This indicates the hardness of the base material.

From this, it is appreciated that the machining with the rake angle of 14° that is a conventional machining method causes the surface work hardening of as much as 200 HV or more from the original hardness of the base material due to the machining; to the contrary, in the machining with the rake angle of 35° by use of the machining method according to the present invention, the work hardening is significantly reduced due to the reduced cutting resistance.

Fig. 9 and Fig. 10 are photographs, each showing a cross sectional microstructure in the vicinity of the surface of the work material that is one example of Fig. 7. Fig. 9 shows the one with the rake angle α of 14° and Fig. 10 shows the one with the rake angle α of 35°.

In Fig. 9, it is apparent that a large number of strain lines (slip lines) run obliquely at a small interval in the vicinity of the surface. Such a number of strain lines resulted from the machining indicates that the surface work hardening was caused due to the machining. This proves the results of Fig. 8.

On the other hand, in Fig. 10, it is appreciated that such strain lines were hardly seen, so that the work hardening is significantly reduced because of the reduced cutting resistance, which proves the results of Fig. 8.

Fig. 11 and Fig. 12 are photographs showing observation results of EBSP (Electron Back Scattering Pattern) in the vicinity of the surface of the work material. Fig. 11 shows the one with rake angle α of 14° and Fig. 12 shows the one with the rake angle α of 35°.

In this analysis method, a crystal orientation for each crystal grain is distinguished by using a different color (by using a different color density in Fig. 11 and Fig. 12)

In Fig. 11, it is apparent that a thick layer of fine crystal grains is formed in the vicinity of the surface, and the fine crystal grains are refined thickly in the vicinity of the surface layer. Such thick refinement of crystal grains in the vicinity of the surface layer indicates that the cutting resistance was great, so that a thick deformation was generated in the vicinity of the surface layer. Specifically, the surface work hardening was caused due to the machining. This proves the results of Fig. 8.

In Fig. 12, fine crystal grains were formed at a very shallow portion in the vicinity of the surface layer, but noticeable refinement could not be seen, as a whole. From this, it is appreciated that the work hardening was significantly reduced due to the reduced cutting resistance, which proves the results of Fig. 8.

As described above, since the finishing treatment is carried out by the machining using the throw-away tip 5 whose rake angle is of +29° or more, it is possible to securely keep the hardness of the finished surface to be less than 300 HV in terms of the Vickers hardness.

In order to securely keep the hardness of the surface layer to be less than 300 HV in terms of the Vickers hardness, the rake angle α may be set to be 30° or more, or 31° or more, for example.

It is possible to keep the hardness of the surface layer to be less than 300 HV in terms of the Vickers hardness only by use of the machining, as described above; that is, it is possible to finish the surface in a state having no SCC sensitivity, therefore, occurrence of SCC can be suppressed only by use of the machining, without requiring after treatment such as removal of the hardened layer by buffing, pickling, electrolytic grinding or the like and/or applying compressive stress by peening, heat treatment (by use of laser or the like, for example), which has conventionally been carried out.

As described above, only the machining is required, and such after treatment can be eliminated, thereby reducing working hours for the thinning process as well as cost therefor.

In addition, since the hardness of the surface layer is low, even if working such as welding that causes tensile stress is applied after the machining, it is possible to maintain the SCC resistance.

As described above, the machining includes the so-called base treatment process in which the machining using the throw-away tip 5 whose rake angles α are 11° to 27° with the greater depth of cut 17 is carried out prior to the cutting using the throw-away tip 5 whose rake angle α is +29° or more. By this, deep and quick cutting is carried out in advance in the so-called base treatment process of the machining with the greater depth of cut 17, so that the cutting amount can be reduced by use of the throw-away tip 5 whose rake angle of +29° or more. It is possible to reduce the cutting amount by use of the throw-away tip 5 whose rake angle is +29° or more, for which the depth of cut 17 cannot be greater in view of the durability, thereby enhancing efficiency of the machining.

Note that it is preferable that the depth of cut 17 in the base treatment process is 1 mm or less, preferably 0.2 mm or more and 0.3 mm or less.

If the cutting with the depth of cut 17 of more than 1 mm is carried out, the hardness of the machined surface becomes significantly high, so that it becomes difficult to make the hardness less than 300 HV in terms of the Vickers hardness even if the throw-away tip 5 whose rake angle α is +29° or more is used in the following cutting. Addition to this, it becomes difficult to apply the throw-away tip 5 whose tip end of the tool is very sharp and whose rake angle is +29° or more.

The depth of cut 17 in the base treatment process is preferably set to be 0.2 mm or more and 0.3 mm or less because the hardness can be softened.

It is preferable that the treatment amount of the base treatment process is 0.5 mm thick or more and 2 mm thick or less, preferably 1 mm thick or so.

In the case where the treatment amount of the machining exceeds the above range, in consideration of the machining efficiency, it is preferable to perform a rough machining treatment process in which rough machining treatment is carried out with the greater depth of cut 17 before the base treatment process.

Note that the present invention is not limited to the above explained embodiment.

For example, the present embodiment is applied to the thinning process of the ordinary piping in a pressurized-water nuclear plant, but is not limited to such thinning, and is also applicable to other machining for ordinary piping and others. It is also applicable to machining for piping in a secondary system or the like in a pressurized-water nuclear plant, and for recirculation piping or other piping in a boiling-reactor nuclear power plant. Furthermore, it is also applicable to machining for piping in a chemical plant or a thermal power plant, etc.

It is not limited to machining for piping but is applicable to machining for various equipment and piping of austenite stainless steel such as plate material or block material.

### {Reference Signs List}

- 1: Ordinary piping
- 2: Throw-away tip
- 3: Depth of cut

## Claims

1. A machining method for austenite stainless steel equipment and piping comprising:
a finishing treatment process for forming a machined surface on a work material by repeatedly carrying out a process of moving a finishing-cut tool (5) whose rake angle (α) is +29° or more toward a feed direction with respect to a work material and of cutting a surface of the work material to suppress work hardening of the machined surface so as to keep the hardness of the machined surface to be less than 300 HV in terms of the Vickers hardness, **characterized in that** the machining method further comprises:
a base treatment process for performing a machining operation by use of a base-cut tool (5) whose rake angle (α) is smaller than the rake angle (α) of the finishing-cut tool (5) with a depth of base cut (17) that is a greater depth of cut than the depth of finishing cut, prior to the finishing treatment process,
wherein a cutting amount of the work material in the base treatment process is greater than a cutting amount of the work material in the finishing treatment process.

2. The machining method for austenite stainless steel equipment and piping according to claim 1, wherein
a depth of finishing cut (17) for the finishing-cut tool (5) is 0.1 mm or more and 0.2 mm or less.

3. The machining method for austenite stainless steel equipment and piping according to claim 1 or 2, wherein
the depth of base cut (17) is 1 mm or less, preferably 0.2 mm or more and 0.3 mm or less.

4. The machining method for austenite stainless steel equipment and piping according to any one of claim 1 to 3, wherein
cutting
amount of the base treatment process is 0.5 mm thick or more and 2 mm thick or less, preferably 1 mm thick or so.

5. A machining method according to any one of claims 1 to 4, used on equipment or piping of a nuclear power plant.

## Patentansprüche

1. Bearbeitungsverfahren für Einrichtungen und Rohre aus austenitischem Edelstahl, umfassend:
einen Endbehandlungsprozess zum Formen einer bearbeiteten Oberfläche auf einem Arbeitsmaterial durch wiederholtes Durchführen eines Prozesses des Bewegens eines Endzerspanwerkzeugs (5), dessen Spanwinkel (α) +29° oder mehr beträgt, in Richtung einer Zustellrichtung in Bezug auf ein Arbeitsmaterial und des Zerspanens einer Oberfläche des Arbeitsmaterials, um Kaltverfestigen der bearbeiteten Oberfläche zu unterdrücken, um die Härte der bearbeiteten Oberfläche unter 300 HV Vickershärte zu halten, **dadurch gekennzeichnet, dass** das Bearbeitungsverfahren ferner umfasst:
einen Basisbehandlungsprozess zum Durchführen eines Bearbeitungsvorgangs durch Anwendung eines Basiszerspanwerkzeugs (5), dessen Spanwinkel (α) kleiner als der Spanwinkel (α) des Endzerspanwerkzeugs (5) ist, mit einer Basisspanungstiefe (17), die eine größere Spanungstiefe als die Endspanungstiefe ist, vor dem Endbehandlungsprozess,
wobei ein Zerspanungsausmaß des Arbeitsmaterials in dem Basisbehandlungsprozess größer als ein Zerspanungsausmaß des Arbeitsmaterials in dem Endbehandlungsprozess ist.

2. Bearbeitungsverfahren für Einrichtungen und Rohre aus austenitischem Edelstahl nach Anspruch 1, wobei
eine Endspanungstiefe (17) für das Endzerspanungswerkzeug (5) 0,1 mm oder mehr und 0,2 mm oder weniger beträgt.

3. Bearbeitungsverfahren für Einrichtungen und Rohre aus austenitischem Edelstahl nach Anspruch 1 oder 2, wobei
die Basisspanungstiefe (17) 1 mm oder weniger, vorzugsweise 0,2 mm oder mehr und 0,3 mm oder weniger, beträgt.

4. Bearbeitungsverfahren für Einrichtungen und Rohre aus austenitischem Edelstahl nach einem beliebigen der Ansprüche 1 bis 3, wobei
das Zerspanungsausmaß des Basisbehandlungsprozesses eine Dicke von 0,5 mm oder mehr und eine Dicke von 2 mm oder weniger, vorzugsweise eine Dicke von 1 mm oder dergleichen, beträgt.

5. Bearbeitungsverfahren nach einem beliebigen der Ansprüche 1 bis 4, das auf Einrichtungen oder Rohre eines Kernkraftwerks angewandt wird.

## Revendications

1. Procédé d'usinage pour équipement et canalisation en acier inoxydable austénitique comprenant :
un processus de traitement de finition consistant à former une surface usinée sur une matière première en réalisant à plusieurs reprises un processus consistant à déplacer un outil de coupe de finition (5) dont l'angle de coupe (α) est de +29° ou supérieur vers une direction d'alimentation par rapport à une matière première et à couper une surface de la matière première afin de supprimer l'écrouissage de la surface usinée pour maintenir la dureté de la surface usinée inférieure à 300 HV en termes de dureté Vickers, **caractérisé en ce que** le procédé d'usinage comprend en outre :
un processus de traitement de base consistant à réaliser une opération d'usinage à l'aide d'un outil de coupe de base (5) dont l'angle de coupe (α) est inférieur à l'angle de coupe (α) de l'outil de coupe de finition (5) avec une profondeur de coupe de base (17) qui est une profondeur de coupe supérieure à la profondeur de coupe de finition, avant le processus de traitement de finition,
dans lequel une quantité de coupe de la matière première dans le processus de traitement de base est supérieure à une quantité de coupe de la matière première dans le processus de traitement de finition.

2. Procédé d'usinage pour équipement et canalisation en acier inoxydable austénitique selon la revendication 1, dans lequel :
une profondeur de coupe de finition (17) pour l'outil de coupe de finition (5) est de 0,1 mm ou plus et de 0,2 mm ou moins.

3. Procédé d'usinage pour équipement et canalisation en acier inoxydable austénitique selon la revendication 1 ou 2, dans lequel :
la profondeur de la coupe de base (17) est de 1 mm ou moins, de préférence de 0,2 mm ou plus et de 0,3 mm ou moins.

4. Procédé d'usinage pour équipement et canalisation en acier inoxydable austénitique selon l'une quelconque des revendications 1 à 3, dans lequel :
la quantité de coupe du processus de traitement de base a une épaisseur de 0,5 mm ou plus et de 2 mm ou moins, de préférence une épaisseur de 1 mm environ.

5. Procédé d'usinage selon l'une quelconque des revendications 1 à 4, utilisé sur l'équipement ou la canalisation d'une centrale nucléaire.
